(19) Europäisches Patentamt
European Patent Office
Office européen des brevets

(11) Publication number: 0 087 304
A1

# (12) EUROPEAN PATENT APPLICATION

(21) Application number: 83300879.0

(22) Date of filing: 21.02.83

(51) Int. Cl.[3]: C 09 J 3/14
C 08 F 287/00, C 08 F 265/06

(30) Priority: 24.02.82 US 351797

(43) Date of publication of application:
31.08.83 Bulletin 83/35

(84) Designated Contracting States:
AT BE CH DE FR GB IT LI NL SE

(71) Applicant: Rohm and Haas Company
Independence Mall West
Philadelphia, Pennsylvania 19105(US)

(72) Inventor: Moser, Vincent John
2550 Damian Drive
Hatboro Pennsylvania 19040(US)

(72) Inventor: Slowik, Robert Andrew
744 Sumter Drive
Yardley Pennsylvania 19067(US)

(74) Representative: Angell, David Whilton et al,
Rohm and Haas Company Patent Department
Chesterfield House Bloomsbury Way
London WC1A 2TP(GB)

## (54) Non-aqueous compositions, method of making them, use thereof as or in adhesives, and article adhered therewith.

(57) Non-aqueous compositions useful as or in adhesives comprise

(a) acrylic and/or methacrylic monomer, including blends of monomers, having a flash point greater than 95°C, the monomer being such as to form polymer with a glass transition temperature from 0°C to 100°C,

(b) sequential polymer, dispersed in (a) comprising at least 25% by weight of an elastomeric stage and at least 5% by weight of an outermost rigid stage, and

(c) free radical generator optionally together with an amino polymerisation accelerator.

EP 0 087 304 A1

0087304

# NON-AQUEOUS COMPOSITIONS,METHOD OF MAKING THEM,USE THEREOF AS OR IN ADHESIVES,AND ARTICLE ADHERED THEREWITH

This invention concerns non-aqueous compositions, a method of making them, the use of the compositions as or in adhesives and an article adhered by the compositions.

The invention more particularly concerns non aqueous compositions that can be easily mixed and spread, which compositions are based on sequential polymer, essentially non-flammable acrylic monomer, free radical generator and optionally polymerization accelerator. These compositions may be 100% reactive fluid adhesive compositions, that is compositions which are free of solvents including water, and may display Bingham plastic rheology as well as having attractively low odour and toxicity. The compositions are useful in joining metallic surfaces and bonding high pressure plastic laminate to wood and wood-derived products.

Although many combinations of monomer, polymer, and polymerization catalysts have been proposed as 100% reactive fluid adhesives, such adhesive compositions generally have serious disadvantages. Firstly, if a low molecular weight monomer is used to facilitate dispersion or solution of the polymer, the monomer frequently contributes odour, flammability, and toxicity to the adhesive composition. Secondly, if a relatively high molecular weight monomer is used, it is very often a poor dispersing medium or a poor solvent for the polymer. Mixing such compositions may also be difficult and the flammable monomer may be hazardous if heat is applied to help disperse the polymer or is developed in the course of the dispersion process.

After mixing, such known polymer-in-monomer compositions often have a rubbery, stringy or ropy consistency which makes them difficult to spread. This consistency results from the solubilization of the polymer by the monomer and concomitant generation of polymer chain entanglement "crosslinks". Examples of such odorous and flammable or

difficult to prepare compositions are described in U.S.Patents No. 3,832,274 (methyl methacrylate and nitrile rubber), 4,052,244 (hydroxypropyl acrylate and acrylic rubber), 3,644,569 (styrene and polyurethane), 3,890,407 (methyl methacrylate and chlorosulfonated polyethylene),4,226,954 (lauryl methacrylate and chlorosulfonated polyethylene) and 4,126,504 (acrylic rubber, methyl methacrylate and acrylic acid).

Adhesive compositions comprising a thermoplastic, non-reactive elastomeric polymer dissolved in an addition polymerizable combination of acrylic or methacrylic monomer and a free radical polymerization catalyst system are well known in the art. For example U.S. Patent No.4,126,504 describes such a composition. However, this type of composition suffers from the limitation that the monomer or monomer mixture must be chosen such that the non-reactive thermoplastic polymer will be soluble therein. This limitation restricts the use of the high flash point monomers. In contrast thereto, in the present invention the sequential polymer forms a separate phase dispersed rather than dissolved in the monomer which is polymerized on curing the adhesive. Consequently, high flash point monomers may readily be used.

In addition to the difficulties associated with their preparation, several known compositions, especially those containing chlorosulfonated polyethylene or polyvinyl chloride, may tend to corrode metallic substrates. For example, corrosion results from sulfonic acid groups on the polymer chain in chlorosulfonated polyethylene compositions. Similarly, corrosive hydrogen chloride may be produced from dehydrohalogenation of polyvinyl chloride-based adhesive compositions which are used in automobile production, since high temperature bake cycles are

often required to cure coatings applied after adhesive application.

It is amongst the objects of this invention to provide easily mixed and readily spreadable non aqueous compositions useful as or in adhesives which exhibit desirably low odour, flammability, and toxicity and which can be used to join metal surfaces, plastic surfaces and high pressure plastic laminate to wood or wood derived products. Another object is to prepare compositions exhibiting attractive impact resistance when cured. A further object is to provide adhesive compositions for metal substrates which are less prone to corrode such substrates than compositions containing strongly acidic components.

In addition to use as adhesives, the compositions of this invention may be useful in preparing protective coatings for metallic, plastic, and wood surfaces.

Accordingly the invention provides a non-aqueous composition comprising

(a) acrylic and/or methacrylic monomer, including blends of monomers, having a flash point greater than 95°C, the monomer being such as to form polymer with a glass transition temperature from 0°C to 100°C,

(b) sequential polymer, dispersed in (a) comprising at least 25% by weight of an elastomeric stage and at least 5% by weight of an outermost rigid stage, and

(c)free radical generator.

Preferably a) comprises at least one monomeric ester of acrylic or methacrylic acid, b) comprises two stage core/shell polymer and c) comprises at least one compound which thermally dissociates at a temperature from 0°C to 100°C to yield peroxide or hydroperoxide free radicals. The composition may include at least one amino polymerization accelerator.

The useful monomer is characterised by a flash point of greater than 95°C preferably as measured by ASTM D-32-78 Set-a-Flash Closed Cup Method. The monomer is such as to form homopolymer or copolymer with a $T_g$ in the stated range. Amongst preferred monomer are acryloyloxypropionic acid (AOPA),acryloyloxypropoyloxypropionic acid ($AO_2PA$), and the corresponding higher oligomers of the formula

$$CH_2{=}CHCO_2(CH_2CH_2CO_2)_nH$$

where n is greater than 2 ($AO_nPAs$), dicyclopentenyloxyethyl methacrylate (DCPOEMA) (which is described in U.S. Patent No.4,097,677), hydroxypropyl methacrylate (HPMA), and/or isodecyl methacrylate (IDMA).

The glass transition temperature ($T_g$) of polymers is a conventional criterion of polymer hardness and is described by Floy,Principles of Polymer chemistry, (Cornell University Press, 1953) at pp 56-57. The Tg of a copolymer of any specific composition can be approximately calculated from the $T_g$'s of the corresponding homopolymer Fox, Bull. Am. Physics Soc., 1,3, at p 123 (1956) and from glass transition temperature Factor tables well known to the polymer chemist such as Rohm and Haas acrylic glass temperature analyser, publication No.CM-24 4/76. Only the normal skill and knowledge of such a chemist being required to predict the $T_g$ of a given polymer and to select monomers and their proportions to achieve a polymer of desired $T_g$.

Sequential polymer (b) may comprise multistage core/shell polymers such as those described in U.S. Patents No.3,678,133, 3,985,703, 3,985,704, 4,200,567 and 4,306,040. Such preferred core/shell polymers contain a crosslinked acrylic or butadiene-based elastomeric core phase polymer with a $T_g$ of less than 10°C. This core phase polymer is graft-linked to an outermost rigid thermoplastic stage.

Additional alternating stages of elastomeric and rigid phase may then be subsequently graft-linked to the initial two phase polymer particles. The outermost rigid stage preferably has a $T_g$ of greater than 70°C. The sequential polymer may contain from 25% to 95% by weight of elastomeric stage and from 75% to 5% by weight of an outermost rigid stage. The sequential polymer is most preferably free flowing, readily dispersed powder which can be stirred into the monomer without heat or excessive agitation. Examples of sequential polymers that may be used as component (b) are given in Table 1. The abbreviations used in Table 1 for individual monomers are defined in Table 2. In the monomer compositions given in Table 1, a single slash (/) between abbreviations is used to denote components of a single stage and a double slash (//) is used to separate the sequential stages.

## TABLE 1: SEQUENTIAL POLYMER COMPOSITIONS

| POLYMER NO. | MONOMER COMPOSITION | WEIGHT RATIOS |
|---|---|---|
| 1 | BA/BDA/AIMA//MMA/AIMA | 69.45/.35/.28//19.95/9.97 |
| 2 | BA/BDA/DALM//MMA/AIMA | 69.45/.35/.28//19.95/9.97 |
| 3 | BA/BDA/AIMA//MMA/AIMA | 79.3/.4/.32//9.99/9.99 |
| 4 | BA/BDA/AIMA//AIMA | 89.19/.45/.36//10.00 |
| 5 | BA/BDA/AIMA//MMA/AIMA | 69.45/.35/.28//9.97/19.95 |
| 6 | BA/BDA/AIMA//MMA/DALM | 69.45/.35/.28//19.95/9.97 |
| 7 | BA/BDA/AIMA//MMA/AIMA/EA | 69.45/.35/.28//17.95/9.97/2.00 |
| 8 | BA/BDA/AIMA//MMA/AIMA | 69.45/.35/.28//19.95/9.97 |
| 9 | BA/BDA/AIMA//St//MMA/EA | 59.46/.30/.24//18//19.8/2.2 |
| 10 | BA/BDA/AIMA//St/MMA/EA | 59.48/.3/.24//17.99/19.79/2.2 |
| 11 | BA/BDA/AIMA//MMA/EA | 59.48/.3/.24//35.98/4 |
| 12 | BA/BDA/AIMA//MMA/EA | 72.61/.37/.29//24.03/2.7 |
| 13 | BD/St//St/MMA/EA | 47/13//18//19.8/2.2 |
| 14 | BA/BDA/DALM//MMA | 69.3/.35/.35//30 |
| 15 | BA/BDA/AIMA//St//MMA/EA | 59.47/.3/.24//18.00//19.80/2.19 |
| 16 | BA/BDA/AIMA//St//MMA/EA | 59.46/.3/.24//18//19.8/2.2 |
| 17 | EHA/BDA/AIMA//St//MMA/EA | 59.59/.3/.24//18.00//19.81/2.15 |
| 18 | BA/BDA/AIMA//MMA/LMA | 69.37/.35/.28//20/10 |
| 19 | BA/BDA/AIMA//AN/MMA | 69.37/.35/.28//7.5/22.5 |
| 20 | BA/BDA/AIMA//AN/St | 69.37/.35/.28//7.5/22.5 |
| 21 | BA/BDA/AIMA//AIMA//MMA/EA | 69.45/.35/.28//9.97//17.95/2.00 |
| 22 | BD/St//MMA/DVB//St//MMA/BGDMA | 70.6/3//3/.78//11.02//11.48/.12 |
| 23 | BA/BDA/AIMA//MMA/AA | 69.37/.35/.28//25/5 |
| 24 | BA/BDA/AIMA//MMA/HEMA | 69.37/.35/.28//20/10 |
| 25 | BA/BDA/AIMA//MMA/DMAEMA | 69.37/.35/.28//26.5/3.5 |
| 26 | BA/BDA/AIMA//MMA/AAM | 69.37/.35/.28//26.5/3.5 |
| 27 | BA/BDA/DALM//MMA | 79.2/.4/.4//20 |
| 28 | BA/BDA/AIMA//MMA/EA | 79.28/.4/.32//18/2 |
| 29 | BA/BDA/AIMA//MMA/EA | 81.26/.41/.33//16.2/1.8 |
| 30 | BA/BDA/AIMA//MMA/EA | 84.23/.43/.34//13.5/1.5 |
| 31 | BA/BDA/AIMA//MMA/EA | 87.21/.45/.34//10.8/1.2 |

TABLE 2: MONOMER ABBREVIATIONS

| | | |
|---|---|---|
| BA | = | n-butyl acrylate |
| EA | = | ethyl acrylate |
| EHA | = | 2-ethylhexyl acrylate |
| BDA | = | 1,3 butylene diacrylate |
| BGDMA | = | 1,3 butylene dimethacrylate |
| AIMA | = | allyl methacrylate |
| St | = | styrene |
| MMA | = | methyl methacrylate |
| LMA | = | lauryl methacrylate |
| AN | = | acrylonitrile |
| DALM | = | diallyl maleate |
| PBT | = | poly(butylene terephthalate) |
| BD | = | butadiene |
| AA | = | acrylic acid |
| DMAEMA | = | dimethylaminoethyl methacrylate |
| AAM | = | acrylamide |
| HEMA | = | 2-hydroxyethyl methacrylate |
| PET | = | poly(ethylene terephthalate) |
| DBV | = | divinyl benzene |

The weight ratio of monomer (a) to sequential polymer (b) is preferably from 50-90(a) to 50-10(b).

The free radical generator may be a peroxy or hydroperoxy compound such as benzoyl peroxide (BPO), cumene hydroperoxide (CHP), t-butyl perbenzoate (TBP), and t-butyl hydroperoxide (TBH). The amount of free radical generator (c) is preferably between 1 and 4 weight percent of the total composition.

Amongst the optional amino polymerization accelerators are preferably N,N-dimethylaniline (DMA), N,N-dimethyl-p-toluidine (DMT), N,N-bis(2-hydroxyethyl)-p-toluidine (HET), and condensates of butyraldehyde and aniline or butylamine available from R.T.Vanderbilt Company under the names Vanax 808 and Vanax 833 respectively. The weight of accelerator if used is preferably 2 to 4 percent of the total composition.

The free radical generator or the accelerator or both may be present in the bulk of the composition. However, it is preferred that either the free radical generator or the accelerator be present in the bulk of the composition and that the other be applied to one or both of the substrates to be adhered prior to application of the bulk of the composition. This effectively lengthens the storage stability. When solid free radical generators are used as surface-activators, that is, when they are applied to the surface or surfaces of the substrates and the accelerator is included in the bulk of the composition, it is preferred that the solid free radical generator is dissolved or dispersed in chlorinated solvents such as methylene chloride or in plasticizers such as dibutyl phthalate.

As used throughout the specification and claims of this application

"monomer" includes ester(s) of acrylic or methacrylic acid,

"free radical generator" means a compound capable of generating free radicals,

"amino polymerization accelerator" includes compounds from the following: N,N-di($C_1$-$C_6$)alkyl and N,N-di mono hydroxy-substituted ($C_1$-$C_4$)alkylarylamines and condensates of butyraldehyde and aniline and condensates of butyraldehyde and butylamine.

The compositions of this invention can be made by sifting sequential polymer powder(s) into monomer while stirring the monomer at room temperature. All other components of the composition can then be added with continued stirring.

In order that the invention may be more clearly understood the following examples are given as embodiments of the invention.

EXAMPLE 1

Into a monomer mixture consisting of 35 parts by weight of the total composition of hydroxypropyl methacrylate, 25 parts by weight of dicyclopentenyloxyethyl methacrylate, 10 parts by weight of acryloyloxypropionic acid, is sifted 30 parts by weight of sequential polymer No. 22 of Table 1 above with mechanical stirring. Subsequently, 3 parts per weight of cumene hydroperoxide was mixed into the composition. Prior to application, a thin coating of Vanax 808 was spread over both surfaces to be joined.

EXAMPLES 2-11

In a similar manner Examples 2-11 of Table 3 were prepared.

METALLIC SUBSTRATE ADHESION.

Lap shear test joints were prepared from 25mm x 102mm x 1.6mm test coupons of steel (No. RS-14 from Q-Panel Company) and aluminum (No. AD-13 from Q-Panel Company). Vanax polymerization accelerators were then spread thinly over the area of the test surfaces to be joined. Adhesive compositions were pressed by hand between the treated surfaces to give a bond measuring 25mm x 13mm x 0.25mm. Subsequent to room temperature polymerization, the test specimens formed in this manner were tested for lap tensile shear strength at a separation rate of 1.3mm per min. by ASTM Method D 1002-72. These tests were made after various aging periods at room temperature or under other conditions. Similar test specimens were prepared and tested for impact resistance by ASTM Method G14-77 (Falling Weight Test).

Examples 1-11 of Table 3 indicate that the adhesive compositions of the present invention are

useful for adhering metal to metal. In general, 2,000 psi (14 MPa) is accepted in the art as an adequate level of lap tensile shear strength. Examples 5 and 6 significantly exceed this level. Example 11, prepared without sequential polymer, but including a small amount of fumed silica for thickening, indicates that without sequential polymer far less strength is exhibited.

A comparison of the lap shear strength on aluminum after 4 weeks in 38$^0$C water of Example 5 with Example 7 suggests that the hydrophobic monomer DCPOEMA tends to impart water resistance to the adhesive bond.

A comparison of the impact resistance of Examples 5 and 7 with that of 9, 10, and 11 indicate that inclusion of a significant amount of sequential polymer, here 30%, imparts impact resistance to the adhesive bond. A falling ball impact resistance of 72 in.-lb. (8N-m) is recognized as adequate. The impact resistances of Examples 5 and 6 exceed this level.

The physical form of the compositions according to the invention is known as a Bingham plastic which is characterized by a yield stress. Yield stress is significant in the application of adhesive compositions. An upper limit of yield stress defines spreadability, and a lower limit defines the condition for preventing leakage of the adhesive from the parts being joined. Consistencies between mayonnaise and butter are preferred.

Yield stress was measured with a Brookfield Model RVF Viscometer by the method described by Bowles et al on p. 140 in the November 1955 issue of Modern Plastics, Example 2 in Table 3 has a yield stress of 2100 Pa. Examples 16 and 18 in Table 5 below have yield stresses of 1500 and 2800 Pa. respectively.

EXAMPLES 12-15

It is often necessary when adhesive compositions are to be used in parts assembly that an adhesive bond strong enough to allow handling of the assembled parts be formed quickly. Rapid formation of the bond tends to eliminate the necessity of clamping the parts together thus simplifying the assembly operation and ultimately reducing costs. The time required for an adhesive bond to form between the parts to be assembled is called the fixturing time. Examples 12-15 of Table 4 compare the lap tensile shear strength on steel after short periods of aging of the adhesive compositions of Examples 5-8. A comparison among the examples indicates that a wide range of variation in fixturing time can be obtained with the compositions of this invention. For example the tensile shear strength at 10 minutes of Example 12 is about 10 times greater than that of Example 13. The significant variation in fixturing time is desirable because in some applications it may be important to have adequate time to position and reposition parts before a bond cures. In such cases a relatively slowly polymerizing adhesive is preferred.

TABLE 3: ADHESIVE COMPOSITIONS AND METAL-METAL BONDING

| Adhesive Composition Example No. (parts by weight) | 1 | 2 | 3 | 4 | 5 | 6 | 7 | 8 | 9 | 10 | 11 |
|---|---|---|---|---|---|---|---|---|---|---|---|
| SequentialPolymer No. 22[1] | 30 | 40 | 40 | 30 | 30 | 30 | 30 | 30 | -- | -- | -- |
| SequentialPolymer No. 27[1] | -- | -- | -- | -- | -- | -- | -- | -- | 13 | 13 | -- |
| HEMA | 35 | 25 | 35 | 25 | 60 | 70 | 30 | 35 | 87 | 74 | 77 |
| DCPOEMA | 25 | 25 | 20 | 40 | -- | -- | 30 | 35 | -- | -- | -- |
| AOPA | 10 | 10 | 5 | 5 | 10 | -- | 10 | -- | -- | 13 | 14 |
| CHP | 3 | 3 | 3 | 3 | 2 | 2 | 2 | 2 | 3 | 3 | 3 |
| Cab-O-Sil M-5[3] | -- | -- | -- | -- | -- | -- | -- | -- | -- | -- | 9 |
| Vanax 808[2] | X | X | X | X | X | X | -- | X | -- | -- | -- |
| Vanax 833[2] | -- | -- | -- | -- | -- | X | -- | X | X | X | X |
| Lap shear strength on steel after 2 wk., 25°C | | | | | | | | | | | |
| psi | 1772 | 1144 | 1000 | 1286 | 2450 | 2426 | 1904 | 1574 | 1994 | 1902 | 718 |
| MPa | 12.2 | 7.9 | 6.9 | 8.9 | 16.9 | 16.7 | 13.1 | 10.9 | 13.7 | 13.1 | 5.0 |
| aluminum after 2 wk., 25°C | | | | | | | | | | | |
| psi | 1048 | 692 | 948 | 948 | 2194 | 2380 | 944 | 620 | 1006 | 1316 | 960 |
| MPa | 7.2 | 4.8 | 6.5 | 6.5 | 15.1 | 16.4 | 6.5 | 4.3 | 6.9 | 9.1 | 6.6 |
| aluminum after 4 wk. in 38°C water | | | | | | | | | | | |
| psi | 1442 | 650 | 920 | 1230 | 610 | | 1554 | | | | |
| MPa | 9.9 | 4.5 | 6.4 | 8.5 | 4.2 | | 10.7 | | | | |
| aluminum after 8 wk. at 70°C | | | | | | | | | | | |
| psi | | | | | 2974 | | 2486 | | | | |
| MPa | | | | | 20.5 | | 17.1 | | | | |
| Impact resistance aluminum | | | | | | | | | | | |
| in-lb | | | | | 80 | | 80 | | 20 | 20 | 20 |
| N-m | | | | | 9 | | 9 | | 2.3 | 2.3 | 2.3 |

1 from Table 1
2 surface-activators (2-sided application, indicated by X)
3 fumed silica for thickening

TABLE 4: TIME DEPENDENCE OF ADHESIVE BOND TENSILE STRENGTH

| Lap Tensile Shear Strength on Steel after Aging at 25$^0$C | Example No. | 12 | 13 | 14 | 15 |
|---|---|---|---|---|---|
| | Adhesive Composition of Example No. | 5 | 6 | 7 | 8 |
| 10 min. | psi | 772 | 74 | 82 | 224 |
| | MPa | 5.3 | 0.5 | 0.6 | 1.5 |
| 30 min. | psi | 990 | 614 | 218 | 643 |
| | MPa | 6.8 | 4.2 | 1.5 | 4.4 |
| 60 min. | psi | 1810 | 1264 | 141 | 764 |
| | MPa | 12.5 | 8.7 | 0.9 | 5.3 |
| 2 weeks (from Table 3) | psi | 2450 | 2426 | 1904 | 1574 |
| | MPa | 16.9 | 16.7 | 13.1 | 10.9 |

## EXAMPLES 16-19

### NON-METALLIC SUBSTRATE ADHESION

Adhesive bonds made to illustrate lap shear and hot cleavage resistance between Formica (Formica is a registered trademark of the American Cyanamid Company) high pressure plastic laminate and particle board or plywood were made from coupons of plastic laminate measuring 25mm x 76mm x 1.25mm and pieces of particle board measuring 76mm x 152mm x 13mm or plywood measuring 76mm x 152mm x 6mm. N,N-dimethyl-p-toluidine surface-activator was spread thinly over the back side of the plastic laminate and over one side of the particle board or plywood. The adhesive compositions of Examples 16-19 were prepared as described in Example 1 above and were spread on the activated surface of the particle board or plywood at about 75g/m$^2$. The activated side of the plastic laminate was then pressed by hand onto the adhesive to form a bonded area of 25mm x 25mm. In the first few minutes after forming the bond, a slight shearing action was imposed by hand to determine the fixturing time. After aging 4 days at 25$^0$C the plastic laminate was clamped in one jaw of a tensile tester and the particle board or plywood was clamped in the other jaw. The lap shear resistance was determined at a separation rate of 5mm/min.

Test specimens for hot static cleavage resistance were prepared as described above except that the bonded area between the plastic laminate and plywood was 25mm x 51mm. These test specimens were suspended horizontally in an oven at 70$^0$C with a plastic laminate coupon on the under side and a 500 g weight hanging from the free end of the coupon. The time required for the plastic coupon plus weight to fall was recorded.

Examples 16-19 of Table 5 show that the lap shear adhesion of these adhesive compositions was greater than about 200 psi (1.4 MPa). 200 psi is recognized as an adequate level of lap shear adhesion for this application. The same examples also show substantial resistance to cleavage failure at 70$^0$C.

TABLE 5: ADHESIVE COMPOSITIONS AND LAMINATE/SUBSTRATE BONDING

| Adhesive Composition (parts by weight) | Example No.: | 16 | 17 | 18 | 19 |
|---|---|---|---|---|---|
| Sequential Polymer No. | 22[1] | 50 | 38 | | |
| No. | 27[1] | | | 20 | 17 |
| HPMA | | 50 | 31 | 80 | 41.5 |
| IDMA | | | 31 | | 41.5 |
| $BPO_3$ (50%)[2] | | 4 | 5 | 4 | 4 |
| DMT[3] | | X | X | X | X |
| Fixturing Time (sec) | | 45 | 60 | 15 | 75 |
| Lap shear strength | | | | | |
| Formica/Particle board | | | | | |
| psi | | 378 | 295 | 417 | 308 |
| MPa | | 2.6 | 2.0 | 2.9 | 2.1 |
| Formica/Plywood | | | | | |
| psi | | 373 | 196 | 331 | 326 |
| MPa | | 2.6 | 1.4 | 2.3 | 2.2 |
| Cleavage resistance (hr. at $70^0C$) | | | | | |
| Formica/Plywood | | 5- 20 | 2.5 | 24 | 0.5 |

[1] from Table 1

[2] benzoyl peroxide in butyl benzyl phthalate

[3] N,N-dimethyl-p-toluidine surface-activator, 2-sided application indicated by (X)

EXAMPLES 20-23

Examples 20-23 of Table 6 indicate that the adhesive compositions of Examples 16-19 are useful for adhering flexible polyvinylchloride (PVC) sheet to rigid acrylonitrile-butadienestyrene (ABS) copolymer sheet. One inch wide strips of each substrate were wiped with N,N-dimethyl-p-toluidine. The adhesive was subsequently spread on the ABS sheet and mated by hand to the PVC sheet. After about 24 hours the adhered strips were peeled apart at an angle of $180^0$ in a separation rate of 25cm/min. according to ASTM Method D 903-49.

TABLE 6: ADHESION OF PVC TO ABS SHEET

| Example No. | Adhesive Composition of Example No. (from Table 5) | Peel Resistance lb/in | N/m |
|---|---|---|---|
| 20 | 16 | 3.1 | 545 |
| 21 | 17 | 8.2 | 1443 |
| 22 | 18 | 2.0 | 352 |
| 23 | 19 | 5.3 | 933 |

CLAIMS:

1. A non-aqueous composition comprising

(a) acrylic and/or methacrylic monomer, including blends of monomers, having a flash point greater than 95°C, the monomer being such as to form polymer with a glass transition temperature from 0°C to 100°C,

(b) sequential polymer, dispersed in (a), comprising at least 25% by weight of an elastomeric stage and at least 5% by weight of an outermost rigid stage, and

(c) free radical generator.

2. A composition as claimed in claim 1 wherein said free radical generator comprises a peroxide or hydroperoxide compound.

3. A composition as claimed in claim 1 or 2 wherein (b) comprises two stage core/shell polymer.

4. A composition as claimed in any preceding claim further including an amino polymerisation accelerator.

5. A composition as claimed in any preceding claim wherein the weight ratio of (a) to (b) is 9:1 to 1:1.

6. A composition according to any preceding claim containing at least 90% by weight of (a) plus (b).

7. A composition according to any preceding claim wherein the elastomeric stage comprises crosslinked polymer having at least 25% by weight of butadiene units and at least 10% by weight of styrene units.

8. A composition according to any one of claims 1 to 6 wherein the elastomeric stage comprises crosslinked polymer having at least 90% by weight of butyl acrylate units.

9. A composition according to any preceding claim wherein (b) comprises multi-stage core/shell polymer of which the elastomeric stage comprises the core.

10. A composition according to any preceding claim wherein the rigid-stage comprises at least 90% by weight of methyl methacrylate units.

11. A composition according to any preceding claim wherein the monomer comprises one or more of hydroxypropyl methacrylate, isodecyl methacrylate, dicyclopentenyloxyethyl methacrylate, acryloyloxypropionic acid, and/or acryloyloxypropoyloxy propionic acid.

12. A composition according to any preceding claim wherein the free radical generator comprises cumene hydroperoxide and/or benzoyl peroxide and optionally comprises from 1 to 4 weight percent of the total composition.

13. A composition according to any preceding claim which includes amino polymerization accelerator comprising one or more of N,N-dimethyl aniline, N,N-dimethyl-p-toluidine, N,N-bis(2-hydroxyethyl)-p-toluidine, condensation products of butyraldehyde and aniline, and/or condensation products of butyraldehyde and butylamine, said accelerator optionally comprising from 2 to 4 weight percent of the total composition.

14. Use of a composition according to any preceding claim as or in an adhesive.

15. An article comprising two substrates adhered together by a composition according to any of claims 1 to 13.

AUSTRIAN



CLAIMS:

1. A method of making a non-aqueous composition which comprises forming a mixture of:

(a) acrylic and/or methacrylic monomer, including blends of monomers, having a flash point greater than 95°C, the monomer being such as to form polymer with a glass transition temperature from 0°C to 100°C,

(b) sequential polymer, dispersed in (a), comprising at least 25% by weight of an elastomeric stage and at least 5% by weight of an outermost rigid stage, and

(c) free radical generator.

2. A method as claimed in claim 1 wherein said free radical generator comprises a peroxide or hydroperoxide compound.

3. A method as claimed in claim 1 or 2 wherein (b) comprises two stage core/shell polymer.

4. A method as claimed in any preceding claim wherein the composition further includes an amino polymerisation accelerator.

5. A method as claimed in any preceding claim wherein the weight ratio of (a) to (b) is 9:1 to 1:1.

6. A method as claimed in any preceding claim wherein the composition contains at least 90% by weight of (a) plus (b).

7. A method as claimed in any preceding claim wherein the elastomeric stage comprises crosslinked polymer having at least 25% by weight of butadiene units and at least 10% by weight of styrene units.

8. A method as claimed in any one of claims 1 to 6 wherein the elastomeric stage comprises crosslinked polymer having at least 90% by weight of butyl acrylate units.

9. A method as claimed in any preceding claim wherein (b) comprises multi-stage core/shell polymer of which the elastomeric stage comprises the core.

10. A method as claimed in any preceding claim wherein the rigid-stage comprises at least 90% by weight of methyl methacrylate units.

11. A method as claimed in any preceding claim wherein the monomer comprises one or more of hydroxypropyl methacrylate, isodecyl methacrylate, dicyclopentenyloxyethyl methacrylate, acryloyloxypropionic acid, and/or acryloyloxypropoyloxy propionic acid.

12. A method as claimed in any preceding claim wherein the free radical generator comprises cumene hydroperoxide and/or benzoyl peroxide and optionally comprises from 1 to 4 weight percent of the total composition.

13. A method as claimed in any preceding claim wherein the composition includes amino polymerization accelerator comprising one or more of N,N-dimethyl aniline, N,N-dimethyl-p-toluidine, N,N-bis(2-hydroxyethyl)-p-toluidine, condensation products of butyraldehyde and aniline, and/or condensation products of butyraldehyde and butylamine, said accelerator optionally comprising from 2 to 4 weight percent of the total composition.

14. A method of making an article comprising two substrates wherein a composition produced by a method according to any preceding claim is used as an adhesive in bonding said substrates.

European Patent Office

**0087304**
Application number

# EUROPEAN SEARCH REPORT

EP 83 30 0879

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 044 166 (LOCTITE)<br>* Claims * | 1,2,4-7,11-15 | C 09 J 3/14<br>C 08 F 287/00<br>C 08 F 265/06 |
| A | US-A-4 243 500 (GLENNON C.E.)<br>* Claims * | 1 | |
| A | US-A-4 105 715 (GLEAVE E.R.)<br>* Claims * | 1 | |

TECHNICAL FIELDS SEARCHED (Int. Cl. 3)

C 09 J 3/14
C 08 F 287/00
C 08 F 265/04

The present search report has been drawn up for all claims

| Place of search | Date of completion of the search | Examiner |
|---|---|---|
| THE HAGUE | 27-05-1983 | FOUQUIER J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document